# EUROPÄISCHE PATENTSCHRIFT

(11) **EP 2 369 311 B1**
(45) Veröffentlichungstag und Bekanntmachung des Hinweises auf die Patenterteilung: **15.04.2015**
(21) Anmeldenummer: 10156539.8
(22) Anmeldetag: 15.03.2010
(51) Int. Cl.: G01G 13/02

(54) **Dosiereinheit für fliessfähige Substanzen**
Metering unit for flowable substances
Unité de dosage pour substances pouvant s'écouler

(43) Veröffentlichungstag der Anmeldung: 28.09.2011
(73) Patentinhaber: Mettler-Toledo AG, 8606 Greifensee (CH)
(72) Erfinder: Lüchinger, Paul, 8610 Uster (CH); Ehrbar, Sandra, 8605 Gutenswil (CH)

(56) Entgegenhaltungen:
- NL-A- 9 200 532
- US-A- 5 242 075
- US-A1- 2006 011 653
- US-A1- 2007 006 942

## Beschreibung

Die vorliegende Erfindung bezieht sich auf einen Dosierkopf sowie auf eine Dosiereinheit und eine Dosiervorrichtung für pulver- oder pastenförmiges Dosiergut.

Dosiervorrichtungen mit Dosiereinheiten, die üblicherweise ein Entnahmegefäss und einen Dosierkopf aufweisen, finden insbesondere beim Dosieren kleiner Mengen, beispielsweise toxischer Substanzen, mit hoher Präzision in kleine Zielgefässe Verwendung. Häufig sind solche Zielgefässe auf einer Waage platziert, um die Menge der aus der Dosiervorrichtung ausgetragenen Substanz zu verwiegen, so dass sie anschliessend bestimmungsgemäss weiter verarbeitet werden kann.

In der US 7,284,574 B2 wird eine Dosiervorrichtung beschrieben, in welche eine ein Entnahmegefäss und einen Dosierkopf aufweisende Dosiereinheit eingesetzt werden kann. Der Dosierkopf beinhaltet einen Grundkörper, welcher eine Stirnfläche und eine Anschlussstelle für ein Entnahmegefäss aufweist. Ferner ist in der Stirnfläche des Grundkörpers eine mit der Anschlussstelle verbundene Auslassöffnung angeordnet. Diese ist durch einen Drehschieber verschliessbar, welcher im Grundkörper um seine Mittellängsachse drehbar gelagert ist, wobei diese Mittellängsachse parallel zur Stirnfläche angeordnet ist. Zur Betätigung des Drehschiebers ist an seinem von Aussen zugänglichen Ende ein Kreuzschlitz-Stellglied vorhanden, das mit einer Antriebswelle mit kreuzschraubenzieherförmigem Endstück koppelbar ist. Durch Drehen des mit der Antriebswelle gekoppelten Drehschiebers kann die Auslassöffnung variabel freigegeben werden, so dass das Dosiergut aus der Auslassöffnung tritt und in ein Zielgefäss rieselt. Da der Drehschieber das austretende Dosiergut aufgrund seiner konstruktiven Auslegung ablenkt, muss das Dosiergut unterhalb des Drehschiebers durch ein Gehäuseteil geführt werden, damit das Dosiergut auch in Zielgefässe mit enger Einfüllöffnung dosiert werden kann.

In der US 7,614,429 B2 wird eine Dosiervorrichtung beschrieben, deren Dosierkopf einen Grundkörper beinhaltet, welcher eine Stirnfläche und eine Anschlussstelle für ein Entnahmegefäss aufweist. Ferner ist in einer Seitenfläche des Grundkörpers eine mit der Anschlussstelle verbundene Auslassöffnung angeordnet. Diese ist durch einen Schieber abdeckbar, welcher am Grundkörper parallel zur Seitenfläche linear geführt ist. Zur Betätigung des Schiebers ist ein ringförmiges Stellglied vorhanden, mit welchem der Schieber mechanisch verbunden ist. Durch vertikales Verschieben des Stellgliedes kann die Avslassöffnung variabel freigegeben werden, so dass Dosiergut aus der Auslassöffnung tritt. Da die Austassöffnung an einer Seitenfläche angeordnet ist, tritt das Dosiergut nicht vertikal aus und muss mittels eines fest am Dosierkopf befestigten Trichters in ein Zielgefäss geleitet werden. Ferner kann die lange Schieberzunge zu Dichtigkeitsproblemen führen.

Die in der US 7,284,574 B2 und in der US 7,614,429 B2 offenbarten Dosiervorrichtungen haben den Nachteil, dass unterhalb des Schiebers oder Drehschiebers Gehäuseteile zur Führung des Dosiergutes in das Zielgefäss vorhanden sind, an denen Dosiergut hängen bleibt und dadurch zu ungenauen Ergebnissen führen kann. Besonders kritisch ist dies dann, wenn hochgiftige Substanzen dosiert werden sollen und sich die anhaftenden Partikel, beispielsweise beim Wechsel einer Dosiereinheit von dieser lösen und die Umgebung oder die Bedienperson kontaminieren.

Deshalb sind die im Stand der Technik dargestellten Ausführungen aufgrund ihrer Auslegung nur für gut fliessfähiges Dosiergut wie Flüssigkeiten, Granulate oder spezielle Pulver mit annähernd kugelförmigen, eine glatte Oberfläche aufweisenden Partikeln geeignet, so dass möglichst wenig Dosiergut haften bleibt.

Die in der US 7,614,429 B2 offenbarte Ausführung weist zudem einen komplizierten und teuren Aufbau auf und ist daher nicht kompakt.

Die in NL 920 0532 offenbarte Dosiervorrichtung hat den Nachteil, dass der Schieber in einem Schlitz innerhalb des Grundkörpers angeordnet ist. Dieser Schlitz ist kritisch, da sich dort Dosiergut ablagern kann, was insbesondere bei toxischen Substanzen kritisch ist. Ausserdem ist das Stellglied seitlich der Auslaßöffnung des Entnahmegefässes angeordnet, wodurch die Dosiervorrichtung sperrig ist und gerade bei beengten Platzverhältnissen nur bedingt einsetzbar ist.

Ein ähnliches Problem weisen auch die in der US 7,284,574 B2 dargestellten Ausführungen auf. Zwar ist die in den Figuren 2 bis 7 offenbarte Ausführung des Dosierkopfs kompakt und kostengünstig herstellbar, jedoch erfordert die mechanische Auslegung der Dosiereinheit einen aufwändigen Aufbau der Antriebsvorrichtung, da die Dosiereinheit in vertikaler Richtung in deren Aufnahme eingesetzt wird und zwecks Kopplung durch Drehen um ihre vertikale Mittellängsachse in die richtige Lage gebracht werden muss, so dass die Antriebswelle und der Drehschieber fluchten. Damit der Drehschieber mit der Antriebswelle gekoppelt werden kann, muss nach dem Einsetzen und Ausrichten der Dosiereinheit die Antriebswelle der Antriebsvorrichtung in horizontaler Richtung relativ zum Drehschieber verschoben werden.

Die Aufgabe der vorliegenden Erfindung ist daher, einen kompakten, kostengünstigen Dosierkopf zu schaffen, welcher eine, sowohl auf die Einfüllöffnung der Zielgefässe als auch auf die Ziel menge bezogene, präzise und kontaminationssichere Abgabe von Dosiergut ermöglicht und zu einer einfachen, kostengünstigen Antriebsvorrichtung führt.

Diese Aufgabe wird durch einen Dosierkopf gemäss dem Anspruch 1, eine Dosiereinheit gemäss dem Anspruch 10 und durch eine Dosiervorrichtung gemäss dem Anspruch 12 erfüllt.

Ein Dosierkopf beinhaltet einen Grundkörper, der eine Stirnfläche und eine Anschlussstelle für ein Entnahmegefäss oder einen Verschlussdeckel aufweist. In der Stirnfläche des Grundkörpers ist eine mit der Anschlussstelle verbundene Auslassöffnung angeordnet. Ferner weist der Dosierkopf einen Schieber auf, welcher am Grundkörper parallel zur Stirnfläche mittels einer Linearführung geführt ist. Zur Betätigung des Schiebers weist der Dosierkopf ein Stellglied auf, das um eine zur Stirnfläche orthogonal angeordnete Drehachse drehbar am Grundkörper angeordnet ist und einen Durchbruch beinhaltet, wobei in jeder Stellung des Stellgliedes zum Grundkörper die Auslassöffnung innerhalb der Fläche des Durchbruchs angeordnet ist.

Der Schieber beinhaltet eine Durchlassöffnung und ist zwischen dem Grundkörper und dem Stellglied angeordnet. Mittels einer Drehung des Stellgliedes relativ zum Grundkörper ist der Schieber linear zum Grundkörper verschiebbar, wobei durch das Verschieben der Durchlassöffnung relativ zur Auslassöffnung der Durchlassquerschnitt des Dosierkopfs variierbar und die Durchflussmenge fliessfähigen Dosierguts durch die Durchlassöffnung regelbar ist.

In Bezug auf einen zusammengebauten Dosierkopf weist das Stellglied vorzugsweise eine der Stirnfläche benachbart angeordnete Gegenfläche sowie eine von dieser Gegenfläche abgesenkte Aussparung zur Aufnahme des Schiebers auf, wobei die Mittellängsachse der Aussparung zur Drehachse parallel beabstandet angeordnet ist.

Dies ermöglicht eine besonders kompakte Ausgestaltung des Dosierkopfs und eine einfache Übertragung und Umsetzung der Drehbewegung des Stellgliedes in eine lineare Bewegung des Schiebers. Vorzugsweise ist die Aussparung eine zylindrische Aussparung, da diese auf einfache Weise hergestellt werden kann und sich deren Randkontur infolge der beabstandeten Mittellängsachse einer Kurvenscheibe gemäss, für die Übertragung der Drehbewegung des Stellgliedes auf den Schieber eignet. Es ist jedoch möglich, dass von dieser zylindrischen Form abgewichen werden kann, beispielsweise dass der Querschnitt der Aussparung orthogonal zur Mittellängsachse eine elliptische Form, nur Kreissegmente oder gar beliebig ausgestaltete Kurvenabschnitte aufweist. Durch die Formgebung des Querschnitts der Aussparung kann das Übersetzungsverhältnis zwischen der linearen Bewegung des Schiebers und der Drehbewegung des Stellgliedes variiert werden. Dadurch ist es möglich, bei konstanter Drehwinkelgeschwindigkeit des Stellgliedes eine über die Verschiebelänge variierende Geschwindigkeit der linearen Bewegung des Schiebers zu erreichen.

Der Grundkörper kann ein erstes Mittel und das Stellglied ein zweites Mittel zur Übertragung eines Drehmoments aufweisen. Mögliche Mittel können formschlüssig wirken, wie beispielsweise, Rippen, Vorsprünge, Ansatzflächen für Schlüssel, Ausnehmungen und dergleichen mehr. Weitere, kraftschlüssig wirkende Mittel wie beispielsweise aufgeraute Oberflächen, Gummieinlagen, Beschichtungen mit besonders hohen Reibungskoeffizienten und dergleichen mehr sind ebenfalls einsetzbar.

Damit der Schieber, das Stellglied und der Grundkörper vor Zerstörung durch unsachgemässe Handhabung geschützt werden können, ist vorzugsweise zwischen dem Grundkörper und dem Stellglied eine Drehbegrenzung angeordnet.

Um den Dosierkopf den Anforderungen des Benutzers und/oder den Anforderungen des Dosiergutes anzupassen, kann die Durchlassöffnung und/oder die Auslassöffnung eine Bohrung mit kreisförmigem, dreieckigem oder quadratischem Querschnitt aufweisen. Selbstverständlich sind beliebige Querschnittformen der Durchlassöffnung und/oder Auslassöffnung denkbar, wenn beispielsweise weitere Anforderungen wie das selektive Auswählen der maximalen Korngrösse gewünscht werden.

Durch die Relativbewegungen der einzelnen Partikel des Dosiergutes innerhalb der Dosiereinheit können sich diese aufladen und elektrostatisch aneinander und insbesondere am Stellglied und am Schieber anhaften. Durch angelagertes Dosiergut kann der Dosiervorgang behindert, wenn nicht gar verunmöglicht werden. Ferner kann am Stellglied anhaftendes Dosiergut die Umgebung verschmutzen beziehungsweise kontaminieren. Um dies zu vermeiden, sind der Schieber und das Stellglied vorzugsweise aus elektrisch leitendem Material gefertigt. Der Schieber ist dann über das Stellglied und das Stellglied über eine geeignete Einrichtung mit der Erdung des Stromnetzes oder eines Gebäudes verbindbar, wodurch elektrostatische Ladungen abführbar sind. Der Grundkörper kann selbstverständlich auch aus einem leitenden Material sein.

Zur linearen Führung des Schiebers kann der Schieber eine Führungsleiste aufweisen sowie am Grundkörper eine Nut ausgebildet sein. Da die Herstellung von schmalen, präzisen Nuten insbesondere bei Kunststoffteilen sehr schwierig ist, kann eine in Bezug auf die Breite der Führungsleiste wesentlich breitere Nut ausgebildet werden, wobei mindestens ein Teilabschnitt der Nut in sich parallel versetzt sein muss, damit eine präzise Führung der Führungsleiste möglich ist. Dabei ist der Versatz des Teilabschnitts auf die Breite der Führungsleiste und die Nutbreite abgestimmt. Durch diese Ausgestaltung lässt sich zudem die Reibungskraft in der Linearführung herabsetzen sowie ein Klemmen der Linearführung durch Dosiergutpartikel weitgehend verhindern. Selbstverständlich sind auch andere bekannte Arten von Linearführungen einsetzbar.

Um die Reibungskräfte noch weiter zu verringern, kann die Stirnfläche eine die Auslassöffnung umlaufende Kuppe aufweisen. Dadurch liegt der Schieber nur auf dieser Kuppe auf. An der Kuppe kann ferner eine die Auslassöffnung umlaufende Dichtlippe ausgebildet sein, damit möglichst kein Dosiergut zwischen die Stirnfläche und die Gegenfläche gelangen kann. Die Dimensionen des Grundkörpers, des Stellgliedes und des Schiebers sind derart aufeinander abgestimmt, dass in montiertem Zustand der Schieber leicht an die Dichtlippe gepresst wird.

Selbstverständlich können der Schieber auch am Stellglied linear geführt und die zylindrische Ausnehmung von der Stirnfläche des Grundkörpers abgesenkt sein.

Wie schon einleitend beschrieben, weist eine Dosiereinheit mindestens einen Dosierkopf und mindestens ein mit mindestens einer Anschlussstelle verbundenes Entnahmegefäss oder einen Verschlussdeckel auf. Um eine einsatzbereite Dosiereinheit zu erhalten, wird das Dosiergut in das Entnahmegefäss gefüllt und dieses mit einem Dosierkopf verschlossen. Selbstverständlich kann bei kleinsten Mengen das Dosiergut auch in den Dosierkopf verfüllt und die Anschlussstellen mit einem Verschlussdeckel verschlossen werden. Bei geschlossenem Schieber kann die verfüllte Dosiereinheit bis zum Gebrauch als Vorratsbehälter eingelagert werden. Sofern höhere Anforderungen an die Lagerbedingungen gestellt werden, kann das Stellglied des Dosierkopfs mit einer Abschlusshaube verschlossen werden, deren Rand vorzugsweise bis über den Grundkörper reicht.

Die Dosiereinheit muss aber nicht zwingend einen Verschlussdeckel oder ein Entnahmegefäss aufweisen. Eine Dosiereinheit kann auch ein erfindungsgemässer Dosierkopf sein, der mit mindestens einer, mit der Anschlussstelle verbundenen Zuführvorrichtung versehen ist. Eine derartige Zuführvorrichtung kann beispielsweise ein Silo, ein Tank oder ein Trichter sein.

Die vorangehend beschriebenen Dosiereinheiten können in einer Dosiervorrichtung eingesetzt werden. Eine Dosiervorrichtung beinhaltet eine Grundeinheit, mindestens eine daran angeordnete Aufnahmevorrichtung zur Aufnahme mindestens einer Dosiereinheit und mindestens einer Antriebsvorrichtung. Wie weiter oben beschrieben, weist der Grundkörper ein erstes Mittel und das Stellglied ein zweites Mittel zur Übertragung eines Drehmoments auf. Ferner weist die Aufnahmevorrichtung eine zum ersten Mittel korrespondierende erste Einheit und die Antriebsvorrichtung eine zum zweiten Mittel korrespondierende zweite Einheit auf. Die erste Einheit und die zweite Einheit sind Teile eines Systems, mittels welchem die Dosiereinheit einerseits in Bezug auf die Schwerkraft gehalten und andererseits eine Drehbewegung beziehungsweise eine Abstützung des dadurch aufgebrachten Drehmoments erreicht werden kann, wobei die Zuordnung der Funktionen Halterung, Bewegung und Abstützung des Drehmoments auf die erste und die zweite Einheit nach Belieben aufteilbar sind.

Die Aufnahmevorrichtung kann um eine horizontale Schwenkachse an der Grundeinheit schwenkbar gelagert sein. Dies hat den Vorteil, dass eine Dosiereinheit bequem eingesetzt und während des Einsetzens die Stellung des Schiebers kontrolliert werden kann. Ferner kann der Schwenkmechanismus dazu verwendet werden, das in der Dosiereinheit verfüllte Dosiergut durch ein- oder mehrmaliges Verschwenken aufzulockern. Zusätzliche auf die Aufnahmevorrichtung einwirkende Vibrationen können den Auflockerungsprozess unterstützen. Üblicherweise werden Dosiereinheiten in einer Haltevorrichtung, beispielsweise einem Rack, mit dem Dosierkopf gegen oben eingelagert. Gegen oben heisst in diesem Zusammenhang, dass der Dosierkopf mit seiner Auslassöffnung entgegen der Schwerkraftrichtung weist. Diese Art der Lagerung ist deshalb sinnvoll, weil einige pulverförmige Substanzen die als Dosiergut verfüllt sein können, über die Lagerungszeit Verklumpungen bilden. Diese Verklumpungen könnten den Schieber blockieren oder gar zerstören. Sofern die Dosiervorrichtung in automatisierter Umgebung eingesetzt wird, bietet die schwenkbare Aufnahmevorrichtung zudem die Möglichkeit, die mit der Auslassöffnung gegen oben weisende Dosiereinheit von einem Roboterarm in dieser Lage zu übernehmen, ohne dass der Greifer des Roboters die Dosiereinheit zuerst kopfüber drehen muss.

Die Antriebsvorrichtung kann auf drei Arten auf die Dosiereinheit einwirken. So kann die erste Einheit drehbar an der Aufnahmevorrichtung angeordnet und mit der Antriebsvorrichtung verbunden sein und die zweite Einheit der Halterung der Dosiereinheit und der Abstützung des Drehmoments während des Dosiervorgangs dienen.

Alternativ dazu kann die erste Einheit mit der Aufnahmevorrichtung starr verbunden sein und der Halterung der Dosiereinheit und der Abstützung des Drehmoments während des Dosiervorgangs dienen und die zweite Einheit drehbar mit der Antriebsvorrichtung verbunden sein. Selbstverständlich kann die Antriebsvorrichtung auch auf die erste und die zweite Einheit einwirken, wobei die erste und die zweite Einheit logischerweise eine Relativbewegung zueinander aufweisen müssen, damit ein Öffnungs- oder Schliessvorgang erfolgt.

Die erste und die zweite Einheit können eine Klemmvorrichtung oder eine formschlüssige Halterung sein, welche jeweils mit dem Grundkörper beziehungsweise mit dem Stellglied starr verbindbar sind.

In einer weiteren Ausgestaltung kann die erste Einheit und das erste Mittel der Dosiereinheit sowie die zweite Einheit und das zweite Mittel der Dosiereinheit einen jeweils aufeinander abgestimmten Formschluss aufweisen, wobei die beiden Formschlüsse derart ausgelegt sind, dass bei vollständig eingesetzter Dosiereinheit der Grundkörper zur ersten Einheit und das Stellglied zur zweiten Einheit nur eine einzige Position einnehmen kann.

Durch dieses Schlüssel-Schloss-Prinzip zwischen der ersten Einheit und dem Grundkörper sowie zwischen der zweiten Einheit und dem Stellglied kann eine in die erste Einheit eingesetzte Dosiereinheit in willkürlicher Position bezogen auf den Drehwinkelversatz der ersten und zweiten Mittel zu den ersten und zweiten Einheiten durch einfaches Drehen mittels der Antriebsvorrichtung in der Schliessrichtung präzise und sicher ausgerichtet werden.

Der Dosierkopf und die Dosiereinheit werden im Folgenden anhand von Beispielen und mit Bezugnahme auf die Zeichnungen näher erläutert. Darin zeigen:
- Figur 1: eine Dosiereinheit mit einem erfindungsgemässen Dosierkopf in dreidimensionaler Ansicht;
- Figur 2: eine Explosionsdarstellung der Dosiereinheit aus Figur 1 in dreidimensionaler Ansicht;
- Figur 3: der erfindungsgemässe Dosierkopf in geschnittener Aufsicht;
- Figur 4A: der erfindungsgemässe Dosierkopf in geschnittener Ansicht gemäss der in Figur 3 angegebenen Schnittebene X-X, wobei der Schieber in geschlossener Stellung dargestellt ist und die Auslassöffnung vollständig abdeckt;
- Figur 4B: der erfindungsgemässe Dosierkopf in geschnittener Ansicht gemäss der in Figur 3 angegebenen Schnittebene X-X, wobei der Schieber in einer Zwischenstellung dargestellt ist und die Auslassöffnung teilweise abdeckt;
- Figur 4C: der erfindungsgemässe Dosierkopf in geschnittener Ansicht gemäss der in Figur 3 angegebenen Schnittebene X-X, wobei der Schieber in offener Stellung dargestellt ist und die Auslassöffnung vollständig freigibt;
- Figur 5: schematisch in dreidimensionaler Ansicht eine Dosiervorrichtung mit einer Dosiereinheit, einer Aufnahmevorrichtung und einer Antriebsvorrichtung, sowie einer Waage mit einer Wägezelle zur Erfassung der ausdosierten Dosiergutmasse;
- Figur 6: schematisch in dreidimensionaler Ansicht eine Dosiervorrichtung mit einer Dosiereinheit, mit einer um eine horizontale Drehachse schwenkbaren Aufnahmevorrichtung und einer Antriebsvorrichtung, sowie einer Waage mit einer Wägezelle zur Erfassung der ausdosierten Dosiergutmasse.

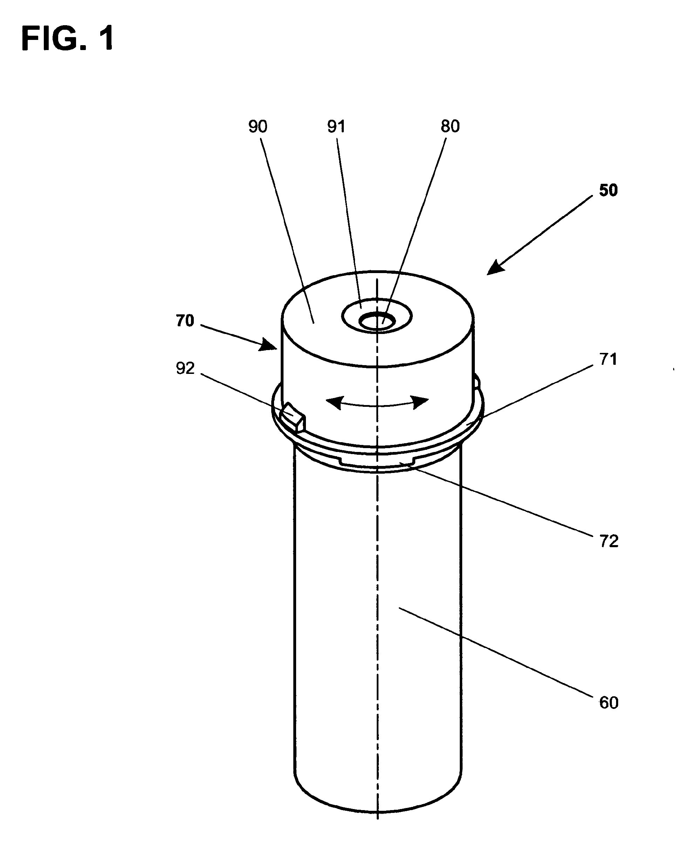

In Figur 1 ist eine Dosiereinheit 50 mit einem erfindungsgemässen Dosierkopf 70 in dreidimensionaler Ansicht dargestellt. Die Dosiereinheit 50 ist in ihrer Montagelage dargestellt, das heisst in der Lage, in welcher das Entnahmegefäss 60 mit dem Dosierkopf verbunden wird. Wenn Dosiergut aus dem Dosierkopf 70 austreten soll, muss die Dosiereinheit 50 kopfüber gedreht werden, so dass der Dosierkopf 70 unten und das Entnahmegefäss 60 oben ist. Der Dosierkopf 70 weist einen nur teilweise sichtbaren Grundkörper 71 auf, mit dem das Entnahmegefäss 60 lösbar verbunden ist. An Stelle des Entnahmegefässes 60 kann auch ein Verschlussdeckel vorhanden sein, so dass ein verfüllter, einsatzbereiter Dosierkopf 70 gleichzeitig den Vorrat an Dosiergut beinhaltet. Ferner sind auch andere Zuführvorrichtungen mit dem Grundkörper 71 verbindbar, beispielsweise ein Trichter, ein Tank, ein Silo oder ein Zuführschlauch. Der Grundkörper 71 weist ferner ein erstes Mittel 72 zur Übertragung eines Drehmoments auf. Selbstverständlich muss das erste Mittel 72 nicht zwingend den in Figur1 dargestellten Vorsprung aufweisen um einen Formschluss mit einer nicht dargestellten ersten Einheit ermöglichen. Der Grundkörper 71 kann als erstes Mittel 72 auch eine Klemmfläche aufweisen die kraftschlüssig, beispielsweise mit einer Klemmpratze oder Spannzange, mit der ersten Einheit verbunden werden kann. Der Grundkörper 71 wird fast vollständig von einem becherförmigen Stellglied 90 umgeben, welches um seine Mittellängsachse drehbar mit dem Grundkörper 71 verbunden ist. Das Stellglied 90 weist stirnseitig einen Durchbruch 91 auf, durch welchen ein kleiner Teil eines Schiebers 80 sichtbar ist. Der Schieber 80 ist in der geschlossenen Stellung dargestellt, weshalb dessen Durchlassöffnung vom Stellglied 90 überdeckt ist. Dies ist aber nicht zwingend erforderlich, der Durchbruch 91 kann auch so gross gewählt werden, dass die Durchlassöffnung des Schiebers 80 immer sichtbar bleibt. Das Stellglied 90 weist wie der Grundkörper 71 ein zweites Mittel 92 zur Übertragung eines Drehmoments auf.

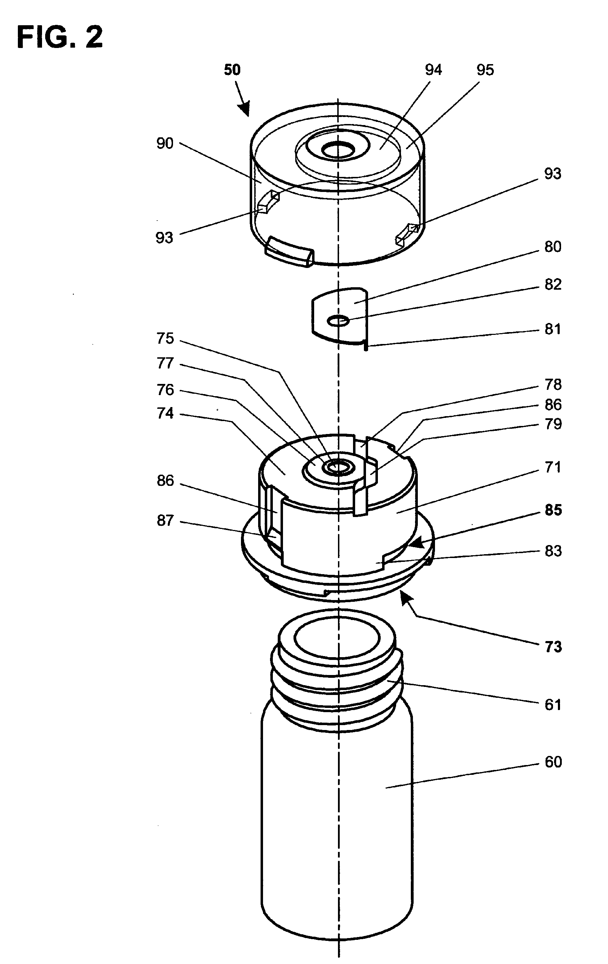

Figur 2 zeigt die Dosiereinheit 50 aus Figur 1 in der Explosionsdarstellung in dreidimensionaler Ansicht. Alle bereits in Figur 1 beschriebenen Merkmale weisen in Figur 2 dieselben Bezugszeichen auf.

Das Entnahmegefäss 60 weist ein Anschlussgewinde 61 auf, welches in eine nicht sichtbare Anschlussstelle 73 des Grundkörpers 71 einschraubbar ist. Der Grundkörper 71 weist eine zylindrische Grundform auf. In seiner Stirnfläche 74 ist eine Auslassöffnung 75 angeordnet, welche auf der Mittellängsachse des Grundkörpers 71 liegt. Die Auslassöffnung 75 ist mit der Anschlussstelle 73 verbunden, so dass im Betriebszustand der Dosiereinheit 50 Dosiergut vom Entnahmegefäss 60 zur Auslassöffnung 75 gelangen kann. Ferner erhebt sich über die Stirnfläche 74 eine, die Auslassöffnung 75 umlaufende Kuppe 76. Die Kuppe 76 weist zudem eine die Auslassöffnung 75 umlaufende Dichtlippe 77 auf.

Am Grundkörper 71 ist ferner eine Nut 78 ausgebildet. Die Nut 78 ist ausgehend von der Stirnfläche 74 orthogonal zur Mittellängsachse abgesenkt, wobei sie an der Auslassöffnung 75 und der Dichtlippe 77 vorbeigeführt ist. Wie dargestellt, kann der mittlere Teilabschnitt 79 der Nut 78 parallel versetzt sein. Dies hat einerseits fertigungstechnische Vorteile, da mit dieser Massnahme eine präzisere Führung des Schiebers 80 geschaffen werden kann, andererseits können dadurch auch die Reibungswiderstände des geführten Schiebers 80 reduziert werden.

Der Schieber 80 ist im Wesentlichen ein flaches Teil, dessen eine Seite abgekröpft ist, wobei die abgekröpfte Seite eine Führungsleiste 81 bildet. Die Führungsleiste 81 ragt bei zusammengebautem Dosierkopf 70 in die Nut 78, wodurch eine Linearführung des Schiebers 80 gegeben ist. Ferner ist im Schieber 80 eine Durchlassöffnung 82 ausgebildet, die in Figur 2 einen kreisrunden Querschnitt aufweist. Selbstverständlich kann die Durchlassöffnung 82 einen beliebigen Querschnitt aufweisen, beispielsweise eine dreieckige, rechteckige, quadratische oder ovale Querschnittform. Wie in der US 7,284,574 B2 bereits ausführlich beschrieben eignet sich die dreieckige Querschnittform besonders, da der Durchlassquerschnitt des Dosierkopfs 70 mittels einer relativen Verschiebung des Schiebers 80 und dessen Durchlassöffnung 82 relativ zur Auslassöffnung 75 bis auf den Durchmesser eines einzelnen Partikels des Dosiergutes angepasst werden kann. Dementsprechend ist nicht nur ein in der Menge variabel einstellbarer Dosiergutstrom aus der Dosiereinheit ausdosierbar, sondern auch einzelne Partikel.

Der besseren Übersichtlichkeit wegen ist die funktionswesentliche Innenkontur des Stellgliedes 90 in unterbrochener Linie dargestellt, insbesondere eine Gegenfläche 95 des Stellgliedes 90 und eine von dieser Gegenfläche 95 abgesenkte zylindrische Aussparung 94 zur Aufnahme des Schiebers 80.

Damit der Schieber 80 nicht zerstört werden kann, muss zwischen dem Grundkörper 71 und dem Stellglied 90 eine Drehwinkelbegrenzung vorhanden sein. Am Grundkörper 71 sind deshalb ein Anschlag 83 und an der Innenseite des Stellgliedes 90 zwei Gegenanschläge 93 ausgebildet. Die Gegenanschläge 93 gleiten in einer am Grundkörper 71 ausgebildeten Lagernut 85, so dass das Stellglied 90 in Richtung der Mittellängsachse gefangen ist. Damit das Stellglied 90 mit dem Grundkörper 71 verbunden, beziehungsweise über diesen gestülpt werden kann, sind an der zylindrischen Seitenwand des Grundkörpers 71 zwei Ausnehmung 86 mit einer Federraste 87 vorhanden, über welche der Gegenanschlag 93 in die Lagernut 85 eingeführt werden kann. Die beiden Gegenanschläge 93 und zugehörenden Ausnehmungen 86 können mit unterschiedlichen Breiten versehen ausgestaltet sein, so dass das Stellglied 90 nur in einer bestimmten Position mit dem Grundkörper 71 verbindbar ist.

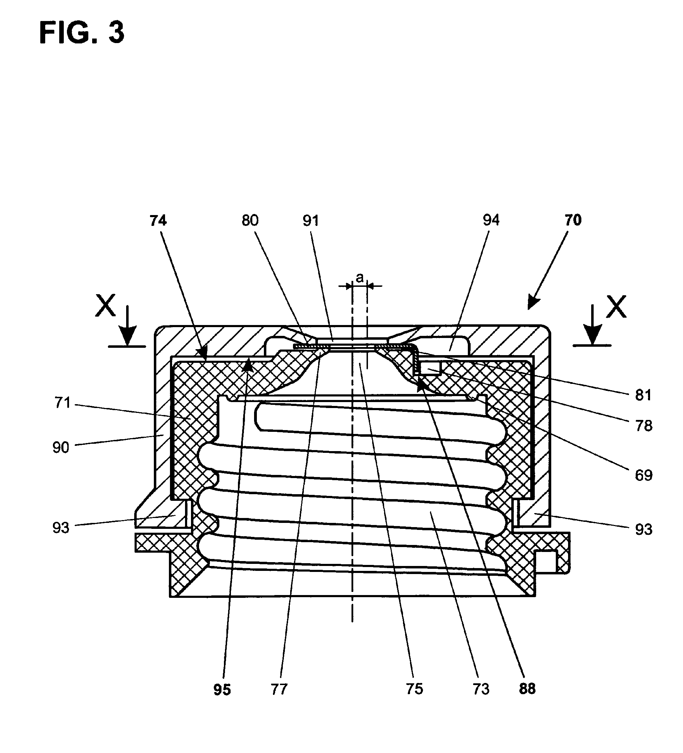

Figur 3 zeigt den zusammengebauten Dosierkopf 70 der Figuren 1 und 2 in geschnittener Aufsicht. Durch die geschnittene Darstellung ist die Verbindung zwischen der Anschlussstelle 73 und der Auslassöffnung 75 innerhalb des Grundkörpers 71 ersichtlich. Des Weiteren ist ersichtlich, dass der Durchbruch 91 des Stellglieds 90 wesentlich grösser ist als der Durchmesser der Auslassöffnung 75. Dadurch wird verhindert, dass Dosiergut im Durchbruch 91 anhaftet. Einige als Dosiergut in die Dosiereinheit 50 verfüllbare pulverförmige Substanzen neigen dazu, sich durch die Strömungsbewegungen im Dosierkopf 70 elektrostatisch aufzuladen. Dies kann dazu führen, dass das Dosiergut am Schieber 80 und am Stellglied 90 anhaftet. Um dies zu vermeiden, sind vorzugsweise das Stellglied 90 und der Schieber 80 aus einem leitenden Material gefertigt, so dass diese Teile geerdet und elektrostatische Ladungen abgeführt werden können.

Ferner ist in der Figur 3 die Anordnung des Schiebers 80 zwischen dem Grundkörper 71 und dem Stellglied 90 einsehbar. Im zusammengebauten Zustand ist die Gegenfläche 95 des Stellgliedes 90 der Stirnfläche 74 des Grundkörpers 71 benachbart angeordnet. Von dieser Gegenfläche 95 ausgehend, ist die zylindrische Aussparung 94 zur Aufnahme des Schiebers 80 abgesenkt. Die Mittellängsachse der zylindrischen Aussparung 94 ist im Abstand a parallel zur Mittellängsachse des Dosierkopfs 70 angeordnet. Der Schieber 80 ist der Dichtlippe 77 anschliessend in der zylindrischen Aussparung 94 angeordnet. Die abgekröpfte Führungsleiste 81 des Schiebers 80 ragt in die Nut 78 und bildet damit eine Linearführung 88. Die Abmessungen des Stellgliedes 90, insbesondere die Distanz zwischen den Gegenanschlägen 93 und der Gegenfläche 95 sind derart auf die Dicke des Schiebers 80 und die Abmessungen des Grundkörpers 71 abgestimmt, dass der Schieber 80 mit leichter Presskraft gegen die Dichtlippe 77 gepresst ist. Um eine definierte Presskraft zu erreichen, ist das Stellglied 90 im Bereich des Durchbruchs 91 wie eine Tellerfeder ausgebildet.

Um eine ausreichende Abdichtung zwischen dem Entnahmegefäss und dem Grundkörper 71 zu erreichen, kann in der Anschlussstelle 73 ein Dichtring 69 ausgebildet oder eingesetzt sein.

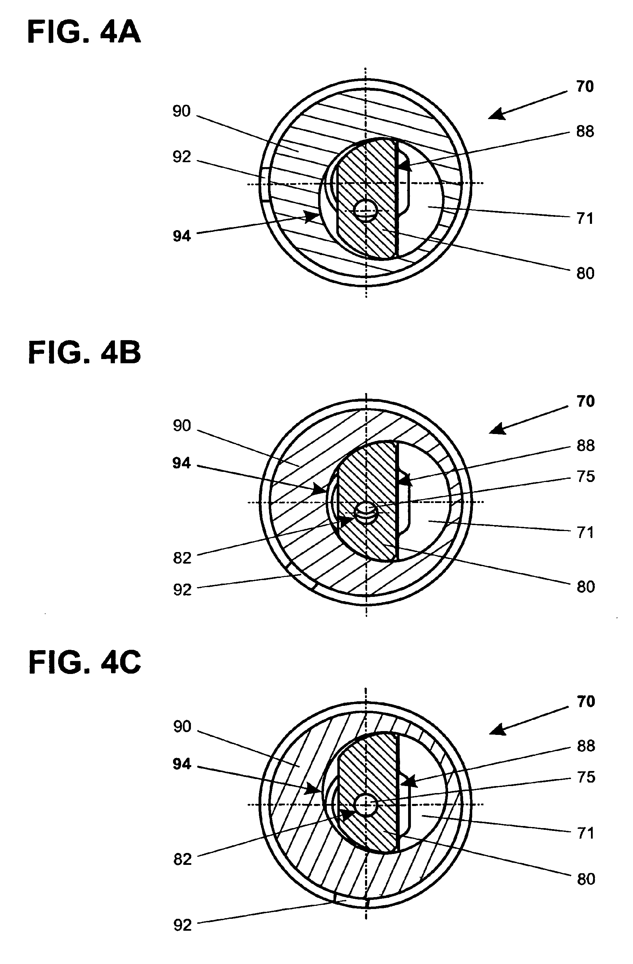

In den nachfolgenden Figuren 4A bis 4C werden der Bewegungsablauf des Schiebers 80 sowie die Funktion der zylindrischen Aussparung 94 und der Linearführung 88 näher erörtert. Die Figuren Figur 4A bis 4C zeigen den erfindungsgemässen Dosierkopf 70 in geschnittener Ansicht gemäss der in Figur 3 angegebenen Schnittebene X-X, wobei der Schieber 80 in unterschiedlichen Stellungen gezeigt wird. Die jeweilige Stellung des Stellgliedes 90 zum feststehenden Grundkörper 71 ist an der Position des zweiten Mittels 92 ersichtlich.

In Figur 4A ist der Schieber 80 in der geschlossenen Stellung dargestellt. Die flächige Ausdehnung des Schiebers 80 scheint in dieser Stellung nicht ganz zur zylindrischen Aussparung 94 zu passen. Der Grund dafür liegt darin, dass sich der Schieber 80 nur in der durch die Linearführung 88 vorgegebenen Richtung bewegen kann, während sich die zylindrische Aussparung 94 auf einer Kreisbahn um die Mittellängsachse des Dosierkopfs 70 bewegt.

In Figur 4B ist der Schieber 80 in einer Zwischenstellung dargestellt, wobei dieser die Auslassöffnung 75 teilweise abdeckt. Die freigegebene Querschnittfläche entspricht aufgrund der kreisförmigen Durchlassöffnung 82 und der kreisförmigen Auslassöffnung 75 etwa einem Drittel der Querschnittfläche der Auslassöffnung 75. Die Veränderung des Querschnitts über den Drehwinkel des Stellgliedes 90 folgt somit einer nichtlinearen Funktion.

Wenn sich der Querschnitt bezogen auf die jeweilige Position des Schiebers 80 zur Auslassöffnung 75 nach einer bestimmten Funktion verändern soll, muss die Querschnittsform der Durchlassöffnung 82 und/oder der Auslassöffnung 75 an diese Anforderung angepasst werden. Denkbar sind in diesem Zusammenhang alle beliebigen Querschnittformen, insbesondere dreieckige, ovale, rechteckige und sichelförmige Querschnitte.

Wie aus der Figur 4B zudem ersichtlich ist, passt die flächige Ausdehnung des Schiebers 80 in dieser Schieberposition nun genau zur zylindrischen Aussparung 94.

In Figur 4C ist der Schieber 80 in offener Stellung dargestellt, wodurch die Auslassöffnung 75 durch die Durchlassöffnung 82 des Schiebers 80 vollständig freigegeben ist. Auch in dieser Stellung erscheint aus demselben Grund wie in Figur 4A erwähnt, die flächige Ausdehnung des Schiebers 80 nicht ganz zur zylindrischen Aussparung 94 zu passen.

In der Beschreibung der Ausführungsbeispiele und in den Figuren weist die Aussparung 94, in welcher der Schieber angeordnet ist, eine zylindrische Form auf. Es ist jedoch möglich, dass von dieser zylindrischen Form abgewichen werden kann, beispielsweise dass der Querschnitt der Aussparung 94 orthogonal zur Drehachse nur Kreissegmente oder gar eine elliptische Form aufweist. Durch die Formgebung kann das Übersetzungsverhältnis zwischen der linearen Bewegung des Schiebers und der Drehbewegung des Stellgliedes beeinflusst werden.

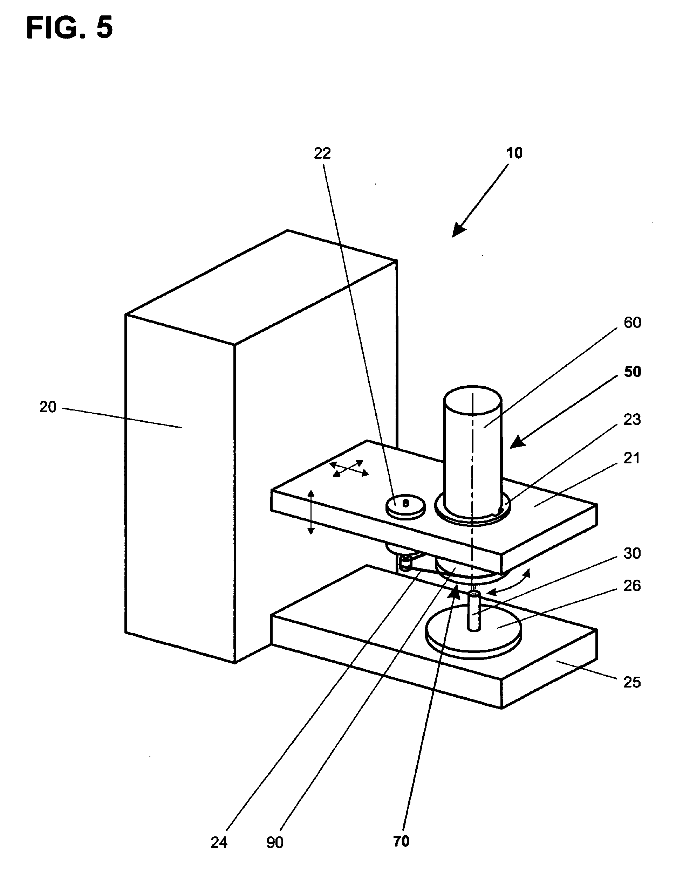

In Figur 5 ist schematisch in dreidimensionaler Ansicht eine Dosiervorrichtung 10 dargestellt, die eine Grundeinheit 20 aufweist. An der Grundeinheit 20 ist eine Aufnahmevorrichtung 21 mit einer Antriebsvorrichtung 22 sowie eine Waage 25 zur Erfassung der ausdosierten Dosiergutmasse angeordnet. Die Grundeinheit 20 kann ein einfaches, starres Gestell sein, sie kann aber auch weitere Elemente beinhalten, beispielsweise eine Prozessoreinheit zur Steuerung und Regelung des Dosiervorgangs, eine Ausgabeeinheit zur Anzeige der Resultate, eine Eingabeeinheit für manuelle Eingaben, ein Kommunikationsmodul welches die Verbindung zu einem übergeordneten Prozesssteuerungssystem erlaubt und dergleichen mehr. Ferner können Vibrationen erzeugende Systeme vorhanden sein, die zwecks Unterstützung der Austragungsleistung von Dosiergut gemäss den dargestellten Doppelpfeilen kurzhubige, oszillierende Bewegungen der Aufnahmevorrichtung 21 erzeugen.

Die Aufnahmevorrichtung 21 weist eine erste Einheit 23 auf die derart ausgestaltet ist, dass eine Dosiereinheit 50 in der Aufnahmevorrichtung 21 gehaltert und ein auf die Dosiereinheit 50 einwirkendes Drehmoment abgestützt werden kann. Vorzugsweise ist die erste Einheit 23 eine Klemmvorrichtung oder ein formschlüssiger Halter, welcher mit dem nicht sichtbaren Grundkörper starr verbindbar ist. Das Drehmoment, welches es abzustützen gilt, wird von der Antriebsvorrichtung 22 erzeugt und mittels einer zweiten Einheit 24, die beispielhaft als kraftschlüssigen Riementrieb ausgestaltet ist, auf das Stellglied 90 der Dosiereinheit 50 übertragen. Selbstverständlich sind auch formschlüssige Übertragungsmöglichkeiten vorsehbar, beispielsweise Zahnräder, Hebel, Kurvenscheiben, Ringschlüssel, Gabelschlüssel und dergleichen mehr.

Die Waage 25 beziehungsweise deren Lastaufnehmer 26 ist unterhalb der Dosiereinheit 50 angeordnet. Auf den Lastaufnehmer 26 ist ein Zielgefäss 30 aufsetzbar, welches das ausdosierte Dosiergut aufnehmen kann. Vorzugsweise ist die Waage 25 mit der Prozessoreinheit der Dosiervorrichtung 10 über Kommunikationsmittel verbunden, so dass die laufend erfassten Wägewerte der Waage 25 in der Prozessoreinheit zur Steuerung des Dosiervorgangs verarbeitet werden können.

Ein Dosiervorgang kann folgende Schritte aufweisen:
o ein mit Dosiergut verfülltes Entnahmegefäss 60 wird mit einem erfindungsgemässen Dosierkopf 70 zu einer Dosiereinheit 50 gemäss Figur 1 vereinigt,
o die Dosiereinheit 50 beziehungsweise deren Grundkörper 71 wird mittels der in der Figur 5 dargestellten ersten Einheit 23 fest mit der Aufnahmevorrichtung 21 verbunden,
o auf den Lastaufnehmer 26 wird ein leeres Zielgefäss 30 aufgesetzt, dessen Taragewicht erfasst und dieses an die Prozessoreinheit übermittelt,
o das Stellglied 90 der Dosiereinheit 50 wird mittels der zweiten Einheit 24 mit der Antriebsvorrichtung 22 verbunden,
o über eine nicht dargestellte Eingabeeinheit wird die auszutragende Dosiergutmenge in die Prozessoreinheit der Dosiervorrichtung 10 eingegeben,
o durch Aktivierung der Antriebsvorrichtung 22 wird das Stellglied 90 gedreht, der nicht einsehbare Schieber linear verschoben und die Auslassöffnung der Dosiereinheit 50 freigegeben,
o die in das Zielgefäss 30 dosierte Dosiergutmasse wird durch die Waage 25 kontinuierlich oder sequentiell erfasst, die Wägewerte werden an die Prozessoreinheit übermittelt bis der Wägewert gleich der gewünschten Dosiergutmenge ist und auf Befehl der Prozessoreinheit dreht die Antriebsvorrichtung 22 das Stellglied 90 in der Gegenrichtung und schliesst die Auslassöffnung.

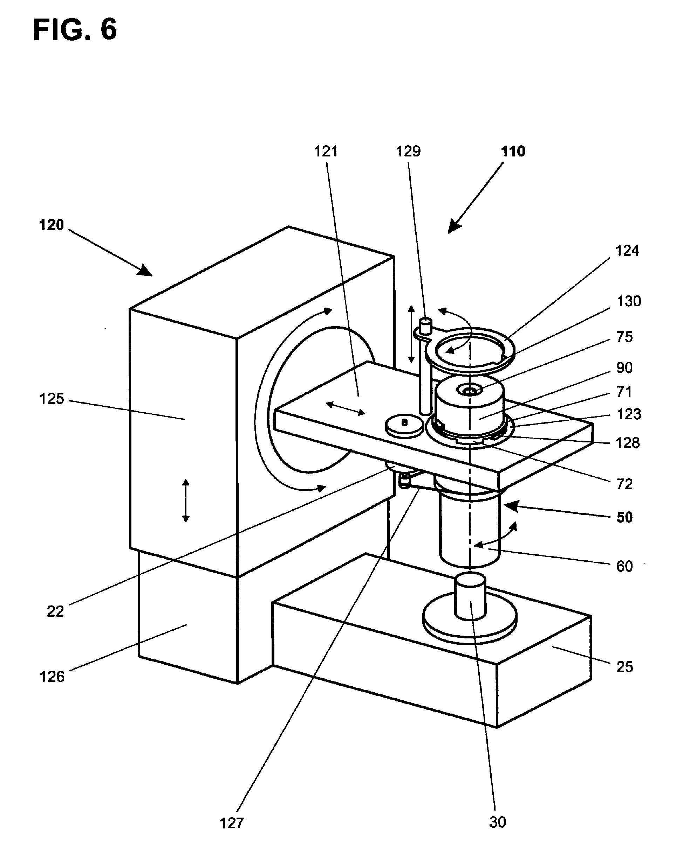

In Figur 6 ist schematisch in dreidimensionaler Ansicht eine Dosiervorrichtung 110 mit einer Dosiereinheit 50 dargestellt, wobei die Dosiervorrichtung 110 eine Aufnahmevorrichtung 121 und eine Antriebsvorrichtung 22 sowie eine Waage 25 mit einer Wägezelle zur Erfassung der ausdosierten Dosiergutmasse aufweist. Die Aufnahmevorrichtung 121 ist mit der Grundeinheit 120 um eine horizontale Drehachse schwenkbar verbunden. Die erste Einheit 123 ist drehbar in der Aufnahmevorrichtung 121 gelagert und über einen Riemen 127 mit einem Antriebsrad der Antriebsvorrichtung 22 verbunden, so dass Drehbewegungen übertragen werden können. Die erste Einheit 123 weist eine erste Aussparung 128 auf, die auf die Form des ersten Mittels 72 abgestimmt ist. Wie die Doppelpfeile andeuten, ist die zweite Einheit 124 entlang eines mit der Aufnahmevorrichtung 121 starr verbundenen Führungsstabes 129 linear verschiebbar und um diesen verschwenkbar ausgestaltet. Ferner ist die zweite Einheit 124 auch am Führungsstab 129 fixierbar. Die zweite Einheit 124 weist eine zweite Aussparung 130 auf, die auf die Form des zweiten Mittels 92 abgestimmt ist.

Figur 6 zeigt die Dosiervorrichtung 110 nicht in betriebsbereitem Zustand, sondern in der Einrichtungsphase. In der Einrichtungsphase wird die Dosiereinheit 50 in die Aufnahmevorrichtung 121 beziehungsweise in eine Bohrung der ersten Einheit 123 eingesetzt. Zur Erstellung der vollständigen Betriebsbereitschaft der Dosiervorrichtung 110 wird hernach die ringförmig ausgebildete zweite Einheit 124 mittels Verschwenken zur Dosiereinheit 50 ausgerichtet und dem Führungsstab 129 entlang linear verschoben, bis das Stellglied 90 durch die zweite Einheit 124 hindurchreicht und diese auf dem zweiten Mittel 92 lose aufliegt. Nun kann die zweite Einheit 124 solange gedreht werden, bis das erste Mittel 72 in der ersten Aussparung 128 und das zweite Mittel 92 in der zweiten Aussparung 230 ruht. Anschliessend wird die zweite Einheit 124 am Führungsstab 129 fixiert und die Aufnahmevorrichtung 121 mitsamt der Dosiereinheit 50 um eine horizontale Drehachse verschwenkt, so dass die Auslassöffnung 75 unmittelbar über der Einlassöffnung des Zielgefässes 30 angeordnet ist. Selbstverständlich kann zur Auflockerung des Dosiergutes die Aufnahmevorrichtung 121 vor dem Dosieren beliebig oft verschwenkt werden. Wie aus der Figur 6 klar ersichtlich ist, wird zum öffnen und schliessen der Dosiereinheit 50 nicht das Stellglied 90 relativ zur Aufnahmevorrichtung 121 gedreht, sondern der Grundkörper 71 mit dem Entnahmegefäss 60.

Um nach dem Dosiervorgang die Dosiereinheit 50 aus der Aufnahmevorrichtung 121 zu entfernen, werden die vorangehend beschriebenen Schritte im Wesentlichen in umgekehrter Reihenfolge durchgeführt.

Damit Zielgefässe 30 mit unterschiedlicher Höhe verwendet werden können, kann die Grundeinheit 120 in ein Unterteil 126 und in ein Oberteil 125 aufgeteilt sein, wobei zur Höhenverstellung das Oberteil 125 zum Unterteil 126 vertikal verschiebbar ist.

Obwohl die Erfindung durch die Darstellung eines spezifischen Ausführungsbeispiels beschrieben worden ist, ist es offensichtlich, dass zahlreiche weitere Ausführungsvarianten in Kenntnis der vorliegenden Erfindung geschaffen werden können, beispielsweise ein Dosierkopf mit mehreren Anschlussstellen für mehrere Entnahmegefässe. Ein Dosierkopf könnte auch mehrere Auslassöffnungen aufweisen, die mit einem Schieber für alle Auslassöffnung oder mit je einem Schieber für jede Auslassöffnung verschliessbar sind. Ferner sind zusätzliche Einrichtungen am Dosierkopf oder Entnahmegefäss möglich, beispielsweise Identifikationsmittel wie Barcodes, Matrixcodes und/oder Radio- Frequency- Identification Mittel (RFID- Tags). Auch Gasanschlüsse zur Einbringung von Schutzgasen in die Dosiereinheit oder Kammern mit Feuchte- Bindemitteln können im Entnahmegefäss und/oder Dosierkopf ausgebildet sein. Selbstverständlich sind die in den Figuren 5 und 6 gezeigten Dosiervorrichtungen nur zwei mögliche, schematisch dargestellte Ausführungsformen, wobei die konstruktiven Details, beispielsweise des in Figur 6 gezeigten Führungsstabes oder der Übertragung des Drehmomentes von der Antriebsvorrichtung auf die Dosiereinheit im Belieben des Fachmanns sind.

### Bezugszeichenliste

- 110, 10: Dosiervorrichtung
- 120, 20: Grundeinheit
- 121,21: Aufnahmevorrichtung
- 22: Antriebsvorrichtung
- 123, 23: erste Einheit
- 124, 24: zweite Einheit
- 25: Waage
- 26: Lastaufnehmer
- 30: Zielgefäss
- 40: Zuführvorrichtung
- 50: Dosiereinheit
- 60: Entnahmegefäss
- 61: Anschlussgewinde
- 69: Dichtring
- 70: Dosierkopf
- 71: Grundkörper
- 72: erste Mittel
- 73: Anschlussstelle
- 74: Stirnfläche
- 75: Auslassöffnung
- 76: Kuppe
- 77: Dichtlippe
- 78: Nut
- 79: Teilabschnitt der Nut
- 80: Schieber
- 81: Führungsleiste
- 82: Durchlassöffnung
- 83: Anschlag
- 85: Lagernut
- 86: Ausnehmung
- 87: Federraste
- 88: Linearführung
- 90: Stellglied
- 91: Durchbruch
- 92: zweites Mittel
- 93: Gegenanschlag
- 94: Aussparung
- 95: Gegenfläche
- 125: Oberteil
- 126: Unterteil
- 127: Riemen
- 128: erste Aussparung
- 129: Führungsstab
- 130: zweite Aussparung
- a: Abstand der Mittellängsachse der Aussparung zur Drehachse

## Patentansprüche

1. Dosierkopf (70) mit einem Grundkörper (71), welcher Grundkörper (71) eine Stirnfläche (74) und eine Anschlussstelle (73) für ein Entnahmegefäss (60) oder einen Verschlussdeckel aufweist und in dessen Stimfläche (74) eine Auslassöffnung (75) angeordnet ist, ferner mit einem Schieber (80) der am Grundkörper (71) parallel zur Stirnfläche (74) mittels einer Linearführung (88) geführt ist, sowie mit einem Stellglied (90) zur Betätigung des Schiebers (80), **dadurch gekennzeichnet, dass** das Stellglied (90) um eine zur Stirnfläche (74) orthogonal angeordnete Drehachse drehbar am Grundkörper (71) angeordnet ist und das Stellglied (90) einen Durchbruch (91) beinhaltet, wobei in jeder Stellung des Stellgliedes (90) zum Grundkörper (71) die Auslassöffnung (75) innerhalb der Fläche des Durchbruchs (91) angeordnet ist, und dass der Schieber (80), welcher eine Durchlassöffnung (82) beinhaltet, zwischen dem Grundkörper (71) und dem Stellglied (90) angeordnet ist und mittels einer Drehung des Stellgliedes (90) relativ zum Grundkörper (71) der Schieber (80) linear zum Grundkörper (71) verschiebbar ist, wobei durch das Verschieben der Durchlassöffnung (82) relativ zur Auslassöffnung (75) der Durchlassquerschnitt des Dosierkopfs (70) variierbar und die Durchflussmenge fliessfähigen Dosierguts durch die Durchlassöffnung (82) regelbar ist.

2. Dosierkopf (70) nach Anspruch 1, **dadurch gekennzeichnet, dass** das Stellglied (90) eine der Stirnfläche (74) benachbart angeordnete Gegenfläche (95) sowie eine von dieser Gegenfläche (95) abgesenkte Aussparung (94) zur Aufnahme des Schiebers (80) aufweist, wobei die Mittellängsachse der Aussparung (80) zur Drehachse parallel beabstandet angeordnet ist.

3. Dosierkopf (70) nach Anspruch 1 oder 2, **dadurch gekennzeichnet, dass** der Grundkörper (71) ein erstes Mittel (72) und das Stellglied (90) ein zweites Mittel (92) zur Übertragung eines Drehmoments aufweisen.

4. Dosierkopf (70) nach einem der Ansprüche 1 bis 3, **dadurch gekennzeichnet, dass** zwischen dem Grundkörper (71) und dem Stellglied (90) ein Anschlag (83) und ein Gegenanschlag (93) als Drehbegrenzung angeordnet ist.

5. Dosierkopf (70) nach einem der Ansprüche 1 bis 4, **dadurch gekennzeichnet, dass** die Durchlassöffnung (82) und/oder die Auslassöffnung (75) eine Bohrung mit kreisförmigem, dreieckigem oder quadratischem Querschnitt ist.

6. Dosierkopf (70) nach einem der Ansprüche 1 bis 5, **dadurch gekennzeichnet, dass** der Schieber (80) und das Stellglied (90) aus leitendem Material gefertigt sind.

7. Dosierkopf (70) nach einem der Ansprüche 1 bis 6, **dadurch gekennzeichnet, dass** zur linearen Führung des Schiebers (80), der Schieber (80) eine Führungsleiste (81) aufweist sowie am Grundkörper (71) eine Nut (78) ausgebildet und mindestens ein Teilabschnitt (79) der Nut (78) in sich parallel versetzt ist, wobei der Versatz des Teilabschnitts (79) auf die Breiten der Führungsleiste (81) und der Nut (78) abgestimmt ist.

8. Dosierkopf (70) nach einem der Ansprüche 1 bis 7, **dadurch gekennzeichnet, dass** die Stirnfläche (74) eine, die Auslassöffnung (75) umlaufende Kuppe (76) aufweist.

9. Dosierkopf (70) nach Anspruch 8, **dadurch gekennzeichnet, dass** an der Kuppe (76) eine, die Auslassöffnung (75) umlaufende Dichtlippe (77) ausgebildet ist.

10. Dosiereinheit (50) mit einem Dosierkopf (70) nach einem der Ansprüche 1 bis 9 und mit mindestens einem, mit der Anschlussstelle (73) verbundenen Entnahmegefäss (60) oder Verschlussdeckel.

11. Dosiervorrichtung (10, 110) mit einer Grundeinheit (20, 120), mit mindestens einer Dosiereinheit (50) nach Anspruch 10, mit mindestens einer an der Grundeinheit (20, 120) angeordneten Aufnahmevorrichtung (21, 121) zur Aufnahme der mindestens einer Dosiereinheit (50) und mit mindestens einer Antriebsvorrichtung (22), **dadurch gekennzeichnet, dass** der Grundkörper (71) ein erstes Mittel (72) und das Stellglied (90) ein zweites Mittel (92) zur Übertragung eines Drehmoments aufweisen und die Aufnahmevorrichtung (21, 121) eine zum ersten Mittel (72) korrespondierende erste Einheit (23, 123) und die Antriebsvorrichtung (22) eine zum zweiten Mittel (92) korrespondierende zweite Einheit (24, 124) beinhalten.

12. Dosiervorrichtung (110) nach Anspruch 11, **dadurch gekennzeichnet, dass** die Aufnahmevorrichtung (121) um eine horizontale Schwenkachse an der Grundeinheit (120) schwenkbar gelagert ist.

13. Dosiervorrichtung (10, 110) nach Anspruch 11 oder 12, **dadurch gekennzeichnet, dass** die erste Einheit (23, 123) drehbar an der Aufnahmevorrichtung (21, 121) angeordnet und mit der Antriebsvorrichtung (22) verbunden ist und die zweite Einheit (24, 124) der Halterung der Dosiereinheit (50) und der Abstützung des Drehmoments während des Dosiervorgangs dient.

14. Dosiervorrichtung (10, 110) nach Anspruch 11 oder 12, **dadurch gekennzeichnet, dass** die erste Einheit (23, 123) mit der Aufnahmevorrichtung (21, 121) starr verbunden ist und der Halterung der Dosiereinheit (50) und der Abstützung des Drehmoments während des Dosiervorgangs dient und die zweite Einheit (24, 124) drehbar mit der Antriebsvorrichtung (22) verbunden ist.

15. Dosiervorrichtung (10, 110) nach einem der Ansprüche 11 bis 14, **dadurch gekennzeichnet, dass** die erste Einheit (23, 123) und das erste Mittel (72) der Dosiereinheit (50) sowie die zweite Einheit (24, 124) und das zweite Mittel (92) der Dosiereinheit (50) einen jeweils aufeinander abgestimmten Formschluss aufweisen, wobei die beiden Formschlüsse derart ausgelegt sind, dass bei vollständig eingesetzter Dosiereinheit (50) der Grundkörper (71) zur ersten Einheit (23, 123) und das Stellglied (90) zur zweiten Einheit (24, 124) nur eine einzige Position einnehmen kann.

## Claims

1. Dosage-dispensing head (70) with a basic body (71), the latter comprising an end surface (74) and a coupling area (73) for a source container (60) or a closure lid, wherein said end surface (74) contains an outlet opening (75), further with a slider (80) which is constrained on the basic body (71) by means of linear guide (88) for guided linear movement parallel to the end surface (74), and also with an aperture-setting member (90) serving to actuate the slider (80), **characterized in that** the aperture-setting member (90) is arranged on the basic body (71) with the ability to turn about a rotary axis that is orthogonal to the end surface, and that the aperture-setting member (90) comprises an orifice opening (91) configured in such a way that, for any position of the aperture-setting member (90) in relation to the basic body (71), the outlet opening (75) falls within the area of the orifice opening (91), that the slider (80), which comprises a passage opening (82), is arranged between the basic body (71) and the aperture-setting member (90) and that, by turning the aperture-setting member (90) in relation to the basic body (71), the slider (80) can be moved in a linear path relative to the basic body (71), whereby the aperture width of the dosage-dispensing head (70) can be varied as a result of the displacement of the passage opening (82) relative to the outlet opening (75) and the flow rate of free-flowing dosage material through the passage opening (82) can be regulated.

2. Dosage-dispensing head (70) according to claim 1, **characterized in that** the aperture-setting member (90) comprises an opposing surface (95) arranged next to the end surface (74) and that the aperture-setting member (90) further comprises a recess (94) set back from said opposing surface (95) and serving to receive the slider (80), wherein the central longitudinal axis of the recess (80) is arranged parallel to, and at a distance from, the rotary axis.

3. Dosage-dispensing head (70) according to claim 1 or 2, **characterized in that** the basic body (71) comprises a first means (72) and the aperture-setting member (90) comprises a second means (92) for transmitting a torque.

4. Dosage-dispensing head (70) according to one of the claims 1 to 3, **characterized in that** a limit stop (83) and an opposing stop (93) are arranged as a means to delimit the range of rotation between the basic body (71) and the aperture-setting member (90).

5. Dosage-dispensing head (70) according to one of the claims 1 to 4, **characterized in that** the passage opening (82) and/or the outlet opening (75) is a perforation having a circular, triangular or square profile.

6. Dosage-dispensing head (70) according to one of the claims 1 to 5, **characterized in that** the slider (80) and the aperture-setting member (90) are made of an electrically conductive material.

7. Dosage-dispensing head (70) according to one of the claims 1 to 6, **characterized in that** - as a means for guiding the slider (80) in linear movement - the slider (80) comprises a guide strip (81), the basic body (71) comprises a groove (78), and at least a partial section (79) of the groove (78) is offset parallel to itself, wherein the offset of the partial section (79) is matched to the respective widths of the guide strip (81) and the groove (78).

8. Dosage-dispensing head (70) according to one of the claims 1 to 7, **characterized in that** the end surface (74) comprises a raised dam (76) encircling the outlet opening (75).

9. Dosage-dispensing head (70) according to claim 8, **characterized in that** a sealing lip (77) surrounding the outlet opening (75) is formed on the raised dam (76).

10. Dosage-dispensing unit (50) with a dosage-dispensing-head (70) according to one of the claims 1 to 9 and with at least one source container (60) or closure lid connected to the connector area (73).

11. Dosage-dispensing device (10, 110) with a base unit (20, 120), with at least one receiving device (21, 121) arranged on the base unit (20, 120) and serving to receive at least one dosage-dispensing unit (50) according to claim 10, and with at least one drive mechanism (22), **characterized in that** the basic body (71) comprises a first means (72) and the aperture-setting member (90) comprises a second means (92) for transmitting a torque, and that the receiving device (21, 121) comprises a first unit (23, 123) corresponding to the first means (72) and the drive mechanism (22) comprises a second unit (24, 124) corresponding to the second means (92).

12. Dosage-dispensing device (10, 110) according to claim 11, **characterized in that** the receiving device (121) is pivotally supported on the base unit (120) and thereby enabled to tilt about a horizontal tilt axis.

13. Dosage-dispensing device (10, 110) according to claim 11 or 12, **characterized in that** the first unit (23, 123) is arranged on the receiving device (21, 121) with the ability to rotate while being connected to the drive mechanism (22), and that the second unit (24, 124) serves to hold the dosage-dispensing unit (50) and to take up the torque during the dosage-dispensing process.

14. Dosage-dispensing device (10, 110) according to claim 11 or 12, **characterized in that** the first unit (23, 123) is rigidly connected to the receiving device (21, 121) and serves to hold the dosage-dispensing unit (50) and to take up the torque during the dosage-dispensing process, and that second unit (24, 124) is rotatably connected to the drive mechanism (22).

15. Dosage-dispensing device (10, 110) according to one of the claims 11 to 14, **characterized in that** the first unit (23, 123) and the first means (72) of the dosage-dispensing unit (50) as well as the second unit (24, 124) and the second means (92) of the dosage-dispensing unit (50) are, respectively, matched to each other for a form-fitting mutual engagement, wherein the two form-fitting matches are designed so that when the dosage-dispensing unit (50) is completely installed, there is only one position, respectively, for the basic body (71) to take in relation to the first unit (23, 123) and for the aperture-setting member (90) to take in relation to the second unit (24, 124).

## Revendications

1. Tête de dosage (70) avec un corps de base (71), ledit corps de base (71) comportant une face frontale (74) et un point de raccordement (73) pour un récipient de prélèvement (60) ou un couvercle de fermeture, une ouverture d'évacuation (75) étant agencée dans la face frontale (74) de celui-ci, en outre avec un poussoir (80) guidé sur le corps de base (71) parallèlement à la face frontale (74) au moyen d'un guide linéaire (88), et avec un organe de réglage (90) pour l'actionnement du poussoir (80), **caractérisée en ce que** l'organe de réglage (90) est agencé sur le corps de base (71) de façon rotative autour d'un axe de rotation agencé orthogonalement à la face frontale (74), et l'organe de réglage (90) contient une percée (91), l'ouverture d'évacuation (75) étant agencée dans la surface de la percée (91) dans chaque position de l'organe de réglage (90) par rapport au corps de base (71), et **en ce que** le poussoir (80) contenant une ouverture de passage (82) est agencé entre le corps de base (71) et l'organe de réglage (90), et le poussoir (80) pouvant être déplacé linéairement par rapport au corps de base (71) au moyen d'une rotation de l'organe de réglage (90) par rapport au corps de base (71), dans laquelle le déplacement de l'ouverture de passage (82) par rapport à l'ouverture d'évacuation (75) permet de modifier la section transversale du passage de la tête de dosage (70) et de régler le débit d'un produit à doser pate à l'écoulement à travers l'ouverture de passage (82).

2. Tête de dosage (70) selon la revendication 1, **caractérisée en ce que** l'organe de réglage (90) comporte une contre-face (95) agencée à côté de la face frontale (74), ainsi qu'un évidement (94) abaissé par rapport à cette contre-face (95) pour la réception du poussoir (80), dans laquelle l'axe longitudinal médian de l'évidement (80) est agencé de façon espacée parallèlement à l'axe de rotation.

3. Tête de dosage (70) selon la revendication 1 ou 2, **caractérisée en ce que** le corps de base (71) comporte un premier moyen (72) et l'organe de réglage (90) comporte un deuxième moyen (92) pour la transmission d'un couple de rotation.

4. Tête de dosage (70) selon l'une des revendications 1 à 3, **caractérisée en ce qu'**une butée (83) et une contre-butée (93) sont agencées entre le corps de base (71) et l'organe de réglage (90) pour limiter la rotation.

5. Tête de dosage (70) selon l'une des revendications 1 à 4, **caractérisée en ce que** l'ouverture de passage (82) et/ou l'ouverture d'évacuation (75) est un perçage avec une section transversale circulaire, triangulaire ou carrée.

6. Tête de dosage (70) selon l'une des revendications 1 à 5, **caractérisée en ce que** le poussoir (80) et l'organe de réglage (90) sont fabriqués en un matériau conducteur.

7. Tête de dosage (70) selon l'une des revendications 1 à 6, **caractérisée en ce que** pour le guidage linéaire du poussoir (80), le poussoir (80) comporte une baguette de guidage (81) et une rainure (78) est formée sur le corps de base (71) et au moins un segment (79) de la rainure (78) est décalé parallèlement en elle-même, dans laquelle le décalage du segment (79) est déterminé par rapport aux largeurs de la baguette de guidage (81) et de la rainure (78).

8. Tête de dosage (70) selon l'une des revendications 1 à 7, **caractérisée en ce que** la face frontale (74) comporte un sommet (76) encerclant l'ouverture d'évacuation (75).

9. Tête de dosage (70) selon la revendication 8, **caractérisée en ce qu'**une lèvre d'étanchéité (77) encerclant l'ouverture d'évacuation (75) est formée sur le sommet (76).

10. Unité de dosage (50) avec une tête de dosage (70) selon l'une des revendications 1 à 9 et avec au moins un récipient de prélèvement (60) ou couvercle de fermeture relié au point de raccordement (73).

11. Dispositif de dosage (10, 110) avec une unité de base (20, 120) avec au moins une unité de dosage (50) selon la revendication 10, avec au moins un dispositif d'accueil (21, 121) agencé sur l'unité de base (20, 120) pour la réception de l'au moins une unité de dosage (50) et avec au moins un dispositif d'entraînement (22), **caractérisé en ce que** le corps de base (71) comporte un premier moyen (72) et l'organe de réglage (90) comporte un deuxième moyen (92) pour la transmission d'un couple de rotation, et le dispositif d'accueil (21, 121) contient une première unité (23, 123) correspondant au premier moyen (72) et le dispositif d'entraînement (22) contient une deuxième unité (24, 124) correspondant au deuxième moyen (92).

12. Dispositif de dosage (110) selon la revendication 11, **caractérisé en ce que** le dispositif d'accueil (121) est monté sur l'unité de base (120) de manière à pivoter autour d'un axe de pivotement horizontal.

13. Dispositif de dosage (10, 110) selon la revendication 11 ou 12, **caractérisé en ce que** la première unité (23, 123) est agencée de façon rotative sur le dispositif d'accueil (21, 121), tout en étant reliée au dispositif d'entraînement (22), et la deuxième unité (24, 124) sert à supporter l'unité de dosage (50) et à soutenir le couple de rotation pendant le procédé de dosage.

14. Dispositif de dosage (10, 110) selon la revendication 11 ou 12, **caractérisé en ce que** la première unité (23, 123) est relié fixement au dispositif d'accueil (21, 121) et sert à supporter l'unité de dosage (50) et à soutenir le couple de rotation pendant le procédé de dosage, et la deuxième unité (24, 124) est reliée de façon rotative au dispositif d'entraînement (22).

15. Dispositif de dosage (10, 110) selon l'une des revendications 11 à 14, **caractérisé en ce que** la première unité (23, 123) et le premier moyen (72) de l'unité de dosage (50) ainsi que la deuxième unité (24, 124) et le deuxième moyen (92) de l'unité de dosage (50) présentent respectivement une complémentarité de forme coïncidant réciproquement, dans lequel les deux complémentarités de forme sont conçues de manière à ce que lorsque l'unité de dosage (50) est complètement insérée, le corps de base (71) ne peut prendre qu'une seule position par rapport à la première unité (23, 123) et l'organe de réglage (90) ne peut prendre qu'une seule position par rapport à la deuxième unité (24, 124).
